# EUROPEAN PATENT SPECIFICATION

(11) **EP 0 348 161 B1**
(45) Date of publication and mention of the grant of the patent: **10.11.1993**
(21) Application number: 89306242.2
(22) Date of filing: 20.06.1989
(51) Int. Cl.: H04J 3/06, H04L 7/04

(54) **Data synchronisation**
Datensynchronisierung
Synchronisation de données

(30) Priority: 22.06.1988 GB 8814821
(43) Date of publication of application: 27.12.1989
(73) Proprietor: BRITISH BROADCASTING CORPORATION, London W1A 1AA (GB)
(72) Inventor: Robinson, Adrian Paul, Tadworth Surrey KT20 6NP (GB)
(74) Representative: Abnett, Richard Charles

(56) References cited:
- GB-A- 2 124 807
- US-A- 4 590 601
- US-A- 4 719 643
- PATENT ABSTRACTS OF JAPAN, vol. 7, no. 13 (E-153)[1158], 19th January 1983; & JP-A 57 171 862 (FUJITSU) 22-10-1982
- PATENT ABSTRACTS OF JAPAN, vol. 7, no. 292 (E-219)[1437], 27th December 1983; & JP-A-58 168 347 (MITSUBISHI) 04-10-1983

## Description

This invention relates to data synchronisation.

There are many instances in which data is transmitted in serial form from a transmitter to a receiver in blocks or groups with each block identified by a block alignment word. The block alignment word is readily identified at the receiver and comprises a sequence of bits which is not mimicked by the data itself. In addition to knowing where the blocks start, however, it is often necessary to synchronise a block count at the receiver with the transmitter. The block count may represent the location of the block in a coarser structure which may be termed a superframe.

Synchronisation of this type can be achieved using a chain code generator. A chain code is derived from a maximal length pseudo-random binary sequence generator. Briefly, a pseudo-random binary sequence (p.r.b.s.) generator comprises a shift register with selected stages logically combined by modulo-2 addition (exclusive-OR gates) and fed back to its input. Provided the stage combination is right, a sequence of bits will be produced which repeats after 2ⁿ - 1 bits, where n is the number of register stages. This is the maximal length sequence; if a sequence of shorter length is required a detector is connected to all the shift register stages and when a particular n-bit state is detected the input to the shift register is inverted. By choosing the detected state appropriately a sequence, or chain code, of any desired length m up to 2ⁿ - 1 can be achieved. All this is well known to those skilled in this art.

A chain code can be used to identify the block number in a sequence of blocks by using a method described in our British Patent GB-A-2 124 807 (Chambers) in which one bit of the chain code is associated with each block in the sequence. In a maximal length p.r.b.s each possible group of n successive bits (there are 2ⁿ - 1 such groups) is different. Thus after n blocks have been received n code bits will have been made available and the position in the 2ⁿ - 1 bit sequence uniquely established. The precise location in the block cycle is determined by addressing a read-only memory (ROM) operative as a look-up table with the n bits. This equally applies with a chain code of less than maximal length in which case there are m possible groups of n bits. Our earlier patent refers in one alternative to transmitting each chain code bit together with its complement along with each data block.

However, transmitting only one bit per block means that for the first n - 1 blocks lock-up or synchronisation can not be achieved. In practice, to ensure that there is no significant likelihood of erroneous lock-up due to error in transmission of one of the code bits for example, a further r bits are required to be transmitted before synchronism can be reliably assumed. Thus for the first (n + r - 1) blocks the situation is uncertain.

It would of course be possible to transmit more than one code bit per block. If s bits per block were transmitted, the waiting time could be reduced. But this would then require a very much larger ROM to decode the chain code.

We have appreciated, however, that if certain steps are taken it is possible to transmit s code bits per block without corresponding increase in the ROM size.

The steps that have to be taken are as follows. First of all, the number s has to be chosen in relation to m such that s and m are mutually prime, i.e. their highest common factor is unity. Then s bits per block are transmitted. We have appreciated that, if s and m are mutually prime, while the sequence will repeat s times over the whole of the m blocks containing s times m code bits in all, it is possible to resolve the s-fold ambiguity by looking at the state of the shift register only once every s bits, i.e. once per block.

The invention will be described in more detail by way of example with reference to the accompanying drawing, in which:
Figure 1 is a block diagram of the relevant part of a receiver which effects data synchronisation in accordance with this invention;
Figure 2 is a block diagram of a transmitter for transmission using a scrambled version of NICAM 728 (see below); and
Figure 3 is a block diagram of a receiver for receiving such signals in more detail than Figure 1.

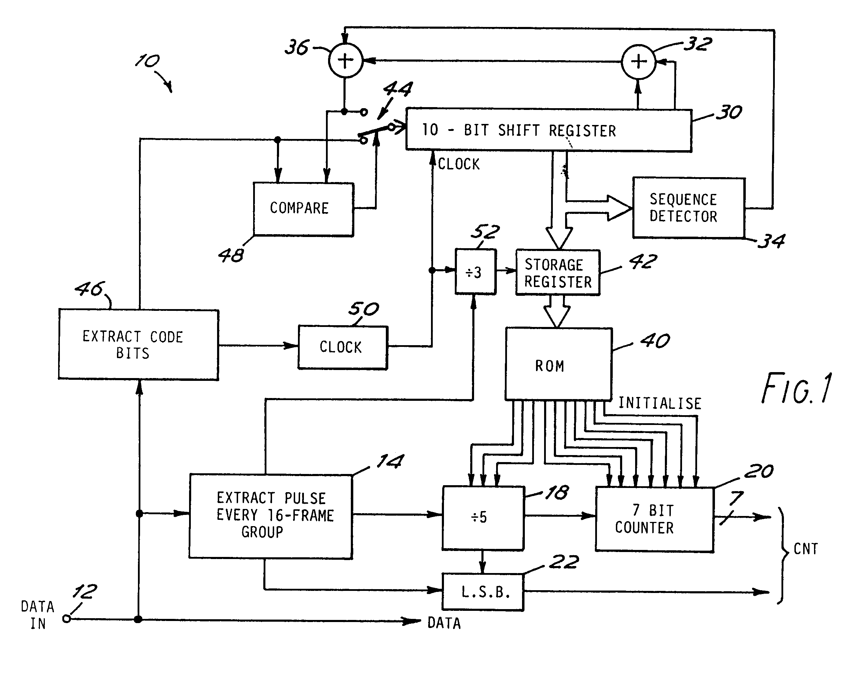

The figures, and in particular Figure 1, are only diagrammatic and illustrate the functions achieved by the apparatus, which may itself be constituted in different forms; indeed many of the functions may be implemented in software for example.

The example will be given with reference to a data signal which comprises frames. The data signal is proposed as a possible data signal to accompany a broadcast television signal. In particular, the system is suitable for use with a scrambled version of the signal described in a publication entitled "Specification of a Standard for UK Stero with Television Transmissions" by British Broadcasting Corporation, September 1986. Such a system is termed NICAM 728. If the data signal is to be sent in scrambled form, then in the descrambling operation an eight-bit count CNT may be used. CNT is incremented every 40 data frames.

The data frames are transmitted as groups of 16 frames. CNT increments from odd to even at the beginning of Frame 1 of the sixteen-frame group, at every fifth occurrence of Frame 1, and from even to odd at the beginning of Frame 9, two and a half groups or 40 frames later.

The receiver must generate the eight-bit count CNT in synchronism with the transmitter. Since the longest sequence defined in the data signal is the 16 frame group, a direct derivation of pulses to increment the count CNT is not possible. A pulse every eight frames can be derived from the multiplex, and these pulses can be applied to a divide-by-five counter to generate a pulse every 40 frames. These pulses can then be used to increment the eight-bit CNT counter with the correct pulse rate. It is still necessary to synchronise the state of the counters with the transmitter and there are a total of 5 times 256 possible states only one of which is correct.

One bit can be saved by making use of the phase relationship between CNT and the 16-frame groups, reducing the number of states by half. Thus a pulse can be applied only once every 16 frames to the divide-by-five counter, and the CNT counter then becomes a seven-bit counter giving the seven most significant bits of CNT. The remaining least significant bit of CNT can be obtained as follows:
i) When the divide-by-five counter contains 0 or 1, the least significant bit of CNT is 0.
ii) When the divide-by-five counter contains 3 or 4, the least significant bit of CNT is 1.
iii) When the divide-by-five counter contains 2, the least significant bit of CNT is 0 for eight frames, and then 1 for the remaining eight frames.

This is shown in the figure where the receiver 10 has a serial data input 12 for receiving the transmitted data. A circuit 14 provides a pulse for every 16 frames of the data sequence. This pulse is applied to a divide-by-five counter 18, the output of which is applied to a seven-bit counter 20. The output of the counter 20 provides the seven most significant bits of CNT, and the least significant bit is provided by a circuit 22 looking at the states of the divide-by-five counter 18, as just described. The circuit 22 receives from the circuit 14 a pulse every eight frames to enable it to operate properly as described above.

To synchronise the receiver with the transmitter it is necessary to specify the state of the 7-bit counter 20, which takes seven bits, and the state of the divide-by-five counter 18, which takes three bits. This gives a total of ten bits. There are a total of five possible states for the divide-by-five counter 18 and 128 possible states for the 7-bit counter 20, making an overall total of 128 times 5, or 640, possible states. Each state corresponds to one position relative to a sequence of 640 of the 16-frame groups. Each sequence of 640 groups therefore represents a "superframe" and it is necessary to determine the position of the incoming 16-frame groups in relation to the superframe.

As described above, a 640 bit chain code could be used for this purpose. A 640 bit chain code is generated by a ten-bit shift register 30 having at least one modulo-2 adder 32 diagrammatically illustrated to provide feed back coupling the last stage and one other stage to the shift register input. To reduce the length of the code from the maximal length of 1023 bits to 640 bits a sequence detector 34 detects a specified 10-bit state in the shift register and on the occurrence of such a state enables the input of modulo-2 adder 36 connected to the output of adder 32, thereby inverting the input to the shift register for that one bit. By appropriate choice in known way of the detected state the last portion of the maximal length sequence is "short circuited" to produce a chain code of 640 bits. All 640 sets of ten successive bits are different, so that after any ten bits have been transmitted we know where we are in the sequence. As is well known with chain code generators a state detector (not shown) is also included to detect the all-zero state and insert a one when this occurs.

A ROM (read-only memory) 40 is needed to decode the state of the shift register 30 into the states of the two counters. Ignoring the storage register 42 for the moment, the ROM is connected to the ten stages of the shift register and operates as a look-up table. In response to the 640 possible ten-bit inputs the ROM provides the corresponding ten-bit output, three bits to the divide-by-five counter 18 and seven bits to the counter 20, so that the value of CNT is correct.

The initialization operation will now be described. At the input to the shift register 30 there is a selector switch 44 which applies to the shift register either the output of modulo-2 adder 36 (for normal running) or the output of a circuit 46 connected to the input 12 which extracts the code bits from the incoming data. A comparator 48 is connected to receive the outputs of adder 36 and circuit 46 and control the switch 44 in response thereto. Initially, switch 44 is placed in its lower position as shown in the figure and the incoming code bits start to be loaded into the shift register 30. After ten bits have been loaded into the register, the gate 36 should be producing the same bits as are received in the subsequent incoming data and extracted by circuit 46. The comparator 48 monitors this. When there have been seven successive agreements, then it assumes that synchronism has been reliably achieved, and changes over switch 44. The number of agreements required is derived as a statistical function of the likely error rate, e.g. the logarithm to base 2 of the odds against failing to detect an error. The comparator continues to monitor the agreement between the outputs of gate 36 and circuit 46 and restarts the initialisation process if synchronism appears to be lost.

Clock pulses for the shift register are also extracted from the incoming data and a clock pulse generator 50 is connected to the register 30 for this purpose.

If one code bit is transmitted with each of the 640 sixteen frame groups it will be 17 groups before synchronism can be reliably detected.

In accordance with this invention, we propose the transmission of three code bits with each of the 16-frame groups. This means that the chain code will go three times through its sequence every superframe of 640 sixteen-frame groups. This gives rise to a three-fold ambiguity. However, we can resolve this ambiguity by taking the state of the shift register after every three code bits, i.e. every 16 frames only. This is successful in resolving the ambiguity because we have chosen three to be mutually prime to 640. Thus looking at the sequence every three bits will give the 640 different states. Alternatives to three would thus be seven or nine, whereas five would not be acceptable because it is not mutually prime to 640.

This may illustratively be achieved by placing the storage register 42 between the shift register 30 and the ROM 40, and enabling the output of this register from the clock pulse generator 50 through a divide-by-three counter 52. The divider 52 is synchronised by an output from the circuit 14. In practice the divide by three operation could be achieved by appropriate clocking of the ROM 40. Either way, only on receipt of every third bit is the ROM output made available.

Once initialised the divider 18 and counter 20 are incremented by the circuit 14 once for each 16-frame group so that the output CNT remains incremented once every 40 frames.

In the illustrated receiver the waiting time before synchronism is reliably achieved is reduced by a factor of approximately three but without the disadvantage of having to increase the size of the ROM to compensate.

In a corresponding transmitter, the clock rate for the generation of the chain code is increased by a factor of three so that three chain code bits are inserted into each sixteen frame block. In other respects the system can be based on that described in our earlier patent.

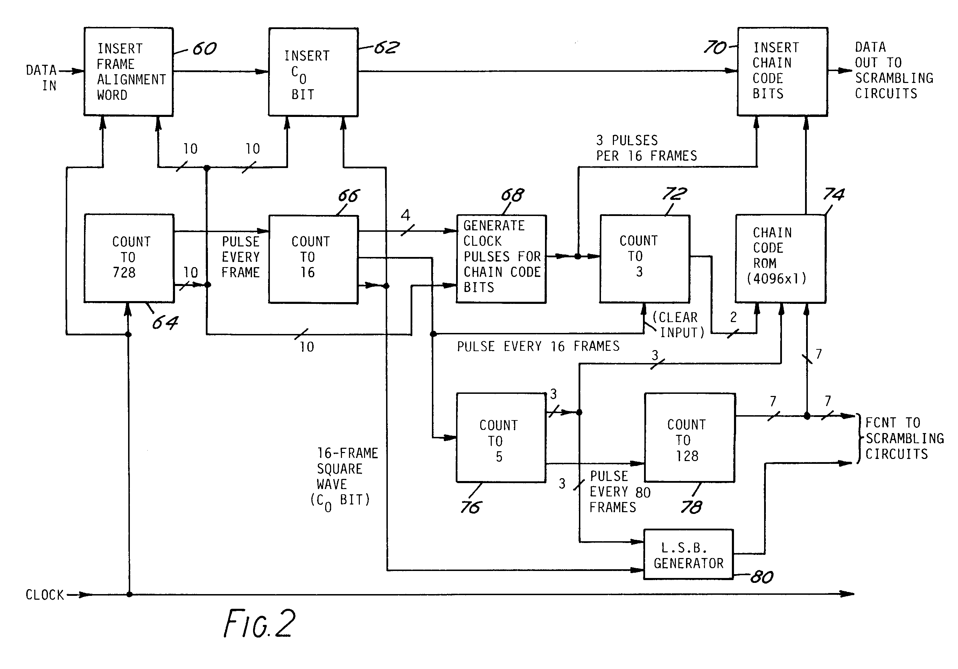

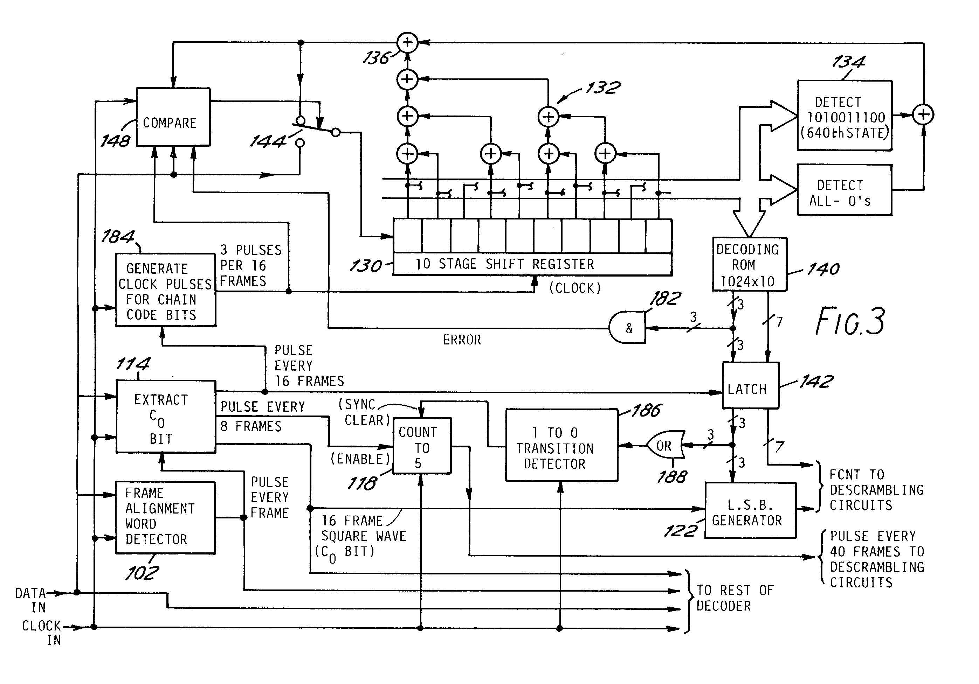

The system described is suitable for use with a scrambled version of the signal described in a publication entitled "Specification of a Standard for UK Stereo with Television Transmissions" by British Broadcasting Corporation, September 1986. Such a system is termed NICAM 728. Figures 2 and 3 illustrate respectively a transmitter and a receiver for such usage. The components of these two figures will be clear from inspection thereof and they are not therefore described in detail. The figures show just the parts of the transmitter and receiver, respectively, that are responsible for synchronisation.

In Figure 2, the circuits 60,62,64,66 constitute part of a "standard" NICAM 728 transmitter, to the current broadcast specification. The rest of the figure is concerned with conveying additional synchronisation by means of a chain code, which in this example is needed for the scrambling and descrambling operations. The chain code bits are actually provided by the chain code ROM 74. Without use of this invention, the ROM would contain a 1920-bit chain code. This corresponds to the rate of transmission of the chain code required to give the desired lock-up time in the receiver. For convenience a 4096 x 1 bit ROM is employed with the remaining 2176 addresses unused. In accordance with the invention the ROM contains a 640-bit chain code repeated three times over. Alternatively it would be possible to have a smaller ROM containing the 640-bit chain code once only, and to generate the required sequence of addresses to address the ROM. The actual 640 bits are determined with reference to the shift register arrangement 130,132,134,136 of Figure 3.

The signal labelled '3 pulses per 16 frames' from the generator 68 has the function of strobing the chain code bits from the ROM 74 into the serial data multiplex at the right times, in the circuit 70. It also advances the scale-of-3 counter 72 to address and read out from the ROM 74 the second and third bits of each group of 3. The pulse every 16 frames from counter 66 applied to the clear input of this counter 72 ensures that the counter is synchronised so that the three bits are read out in the right order.

In Figure 3, the circuits 102 and 114 are part of a 'standard' NICAM 728 receiver. The remaining circuits are concerned with recovering the additional synchronising information. Thus in accordance with this invention the shift register 130 has 10 stages and is arranged to produce a 640-bit chain code, instead of having 11 stages and producing a 1920-bit chain code. The decoding ROM 140 stores 640 x 10 bits instead of 1920 x 10 bits. The latch 142 holds every third value that comes out of the ROM.

For a given value of m, 640 in this example, if s is changed, such as from 3, which corresponds to using the invention, to 1, which does not, the contents of the ROM have to be stored in a different order.

The contents of the ROM are determined with reference to the transmitter of Figure 2, such that the 7-bit and 3-bit outputs of the latch 142 of Figure 3 are the same as the outputs of the scale-of-128 counter 78 and scale-of-5 counter 76 of Figure 2 respectively. Only 5 of the 8 possible values of the 3-bit output are used, and so one of the remaining values, e.g. 111, can be used in the ROM to indicate an invalid state of the shift register, of which there are 384. In Figure 3 this is used in AND gate 182 to generate an error signal to assist the compare circuit 148, thus improving the lock-up performance in the presence of errors.

Another measure which improves the lock-up performance in the presence of errors is to use the maximum possible number of taps on the shift register 130. This is equal to the largest even number which is less than the number of stages, or 8 in this example. A corresponding set of logical combining circuits such as exclusive-OR circuits 132 is connected between these taps and the exclusive -OR gate 136, the output of which is fed back through the switch 144 to the input of the shift register.

As compared with Figure 1, the 7-bit counter 20 and the code bit extractor 46 are omitted in Figure 3. The function of a counter is to go through a predetermined sequence of states and to remember where it is in that sequence. In Figure 3 this function is fulfilled directly by the shift register 130. The code bit extractor is dispensed with by using the shift register clock signal from generator 184 to tell the compare circuit 148 to make the comparison at the moment when the chain code bit comes through. The latch 142 is moved to after the ROM 140 so that the error signal is available for every state of the shift register. The L.s.b. generator 122 is essentially identical to that referenced 80 in Figure 2. The two 3-bit signals at the outputs of counter 76 and latch 142 respectively are the same, thus the scale-of-5 counter 118 does not need to appear between the ROM and the L.s.b. generator.

The synchronisation of the scale-of-5 counter 118 is shown in detail in Figure 3. Note that a 1-to-0 transition detector 186 receives the output of an OR gate 188 which in turn receives the 3-bit signal from the latch 142. The 1-to-0 transition is used in the counter 118 as described with reference to Figure 1. Although correctly-phased pulses every 40 frames are not needed by the circuit shown in Figure 3, they are needed for loading the successive values of FCNT into the next part of the receiver.

In this specification the term "transmit" (and its derivatives) is used in a general sense to include storage and other signal processing which may not involve sending the signal over long distances. Similar considerations apply to the term "receive".

## Claims

1. Data synchronisation apparatus comprising an input for receiving digital data which comprises a plurality of successive data groups in an m-group cycle and code bits for providing a count dependent upon the position of the received group in the cycle, means coupled to the input for extracting code bits from the successive groups, the code bits corresponding to successive bits in an m-bit chain code, and means for outputting the n recent ones of the m bits, where n is the lowest integer such that 2ⁿ - 1 is greater than or equal to m, characterised in that the extracting means detects a plurality s of successive code bits from each data group, where s and m are mutually prime, and that the outputting means provides an output only once every s code bits.

2. Apparatus according to claim 1, including a read-only memory coupled to receive and decode the set of n recent bits.

3. Apparatus according to claim 2, in which the decoded output of the read-only memory is used to initialise counter means.

4. Apparatus according to claim 3, in which the counter means comprises a divide-by-five counter and a seven-bit counter and is provided with means for providing an eighth output bit in dependence upon the count in the divide-by-five counter.

5. Apparatus according to any preceding claim, in which n is ten.

6. Apparatus according to claim 5, in which m is 640 and s is three.

7. A data transmitter for transmitting digital data which comprises a plurality of successive data groups in an m-group cycle and code bits for providing a count dependent upon the position of a transmitted group in the cycle, means for generating code bits from an m-bit chain code and associating the code bits with respective data groups in the cycle, the chain code being derived from a 2ⁿ - 1 bit pseudo-random binary sequence where 2ⁿ - 1 is greater than or equal to m, characterised in that a plurality s of successive code bits are associated with each data group, where s and m are mutually prime.

## Patentansprüche

1. Datensynchronisationsvorrichtung mit einem Eingang zum Empfangen digitaler Daten, die eine Vielzahl aufeinanderfolgender Datengruppen in einem m-Gruppen-Zyklus und Codebits zur Bildung eines Zählwertes in Abhängigkeit von der Lage der empfangenen Gruppe in dem Zyklus aufweisen, mit einem am Eingang angeschlossenen Mittel zum Extrahieren von Codebits aus den aufeinanderfolgenden Gruppen, wobei die Codebits aufeinanderfolgenden Bits in einem m-Bit-Kettencode entsprechen, und mit einem Mittel zum Ausgeben der n letzten Bits der m Bits, wobei n die kleinste ganze Zahl ist, so daß 2ⁿ-1 großer als oder gleich m ist, **dadurch gekennzeichnet,** daß das Extrahiermittel eine Anzanl s von aufeinanderfolgenden Codebits aus jeder Datengruppe feststellt, wobei s und m gegenseitig Primzahlen sind, und daß das Ausgabemittel nur einmal alle s Codebits eine Ausgabe bewirkt.

2. Vorrichtung nach Anspruch 1 mit einem Festspeicher, der so angeschlossen ist, daß er den Satz der n letzten Bits empfängt und decodiert.

3. Vorrichtung nach Anspruch 2, bei der die decodierte Ausgangsgröße des Festspeichers zur Initialisierung eines Zählmittels verwendet wird.

4. Vorrichtung nach Anspruch 3, bei der das Zählmittel einen durch 5 teilenden Zähler und einen 7-Bit-Zähler aufweist und mit einem Mittel zur Bildung eines achten Ausgangs-Bits in Abhängigkeit von dem Zählwert im durch 5 teilenden Zähler versehen ist.

5. Vorrichtung nach einem der vorstehenden Ansprüche, bei der n gleich 10 ist.

6. Vorrichtung nach Anspruch 5, bei der m gleich 640 und s gleich drei ist.

7. Datensender zum Senden digitaler Daten, die eine Vielzahl aufeinanderfolgender Datengruppen in einem m-Gruppen-Zyklus und Codebits zur Bildung eines Zählwerts in Abhängigkeit von der Position einer gesendeten Gruppe im Zyklus aufweisen, mit einem Mittel zum Erzeugen von Codebits aus einem m-Bit-Kettencode und zum Zuordnen der Codebits zu jeweils einer Datengruppe im Zyklus, wobei der Codebit aus einer Pseudozufalls-Binärfolge mit 2ⁿ-1 Bits abgeleitet ist, wobei 2ⁿ-1 größer als oder gleich m ist, **dadurch gekennzeichnet,** daß eine Anzahl s aufeinanderfolgender Codebits jeder Datengruppe zugeordnet sind, wobei s und m gegenseitig Primzahlen sind.

## Revendications

1. Appareil de synchronisation de donnée comprenant une entrée de réception d'une donnée numérique qui comprend une série de groupes successifs de données dans un cycle à m groupes et des bits de code pour fournir un compte qui dépend de la position du groupe reçu dans le cycle, un moyen couplé à l'entrée pour extraire des bits de code des groupes successifs, les bits de code correspondant à des bits successifs dans un code de chaîne à m bits, et un moyen de sortir les n bits récents parmi les m bits où n est le plus petit entier tel que 2ⁿ-1 soit supérieur ou égal à m, caractérisé en ce que le moyen extracteur détecte une pluralité s de bits successifs de code, de chaque groupes de données, s et m étant premiers entre eux, et en ce que le moyen de sortie ne fournit une sortie que tous les s bits de code.

2. Appareil selon la revendication 1 incluant une mémoire morte couplée de manière à recevoir et à décoder l'ensemble des n bits récents.

3. Appareil selon la revendication 2, dans lequel la sortie décodée de la mémoire morte est utilisée pour lancer le moyen compteur.

4. Appareil selon la revendication 3, dans lequel le moyen compteur comprend un compteur diviseur par 5 et un compteur à sept bits et est pourvu d'un moyen de production d'un huitième bit de sortie en fonction du compte du compteur diviseur par cinq.

5. Appareil selon une revendication précédente quelconque dans lequel n est dix.

6. Appareil selon la revendication 5 dans lequel m est 640 et s est trois.

7. Un transmetteur de donnée pour transmettre une donnée numérique qui comprend une série de groupes successifs de donnée dans un cycle à m groupes et des bits de code pour fournir un compte qui dépend de la position d'un groupe transmis dans le cycle, un moyen de génération de bits de code, à partir d'un code de chaîne à m bits, et d'association des bits de code avec des groupes respectifs de donnée du cycle, le code de chaîne étant dérivé d'une séquence binaire pseudo-aléatoire à 2ⁿ-1 bits, 2ⁿ-1 étant supérieur ou égal à m, caractérisé en ce qu'une pluralité s de bits successifs de code sont associés à chaque groupe de donnée, s et m étant premiers entre eux.
